# EUROPÄISCHE PATENTSCHRIFT

(11) **EP 1 372 371 B1**
(45) Veröffentlichungstag und Bekanntmachung des Hinweises auf die Patenterteilung: **27.12.2006**
(21) Anmeldenummer: 02745194.7
(22) Anmeldetag: 19.03.2002
(51) Int. Cl.: A01C 17/00

(54) **SCHLEUDERDÜNGERSTREUER**
SPINNING MUCK-SPREADER
EPANDEUR D'ENGRAIS CENTRIFUGE

(30) Priorität: 02.04.2001 DE 10116375; 05.05.2001 DE 10140439
(43) Veröffentlichungstag der Anmeldung: 02.01.2004
(73) Patentinhaber: Amazonen-Werke H. Dreyer GmbH & Co. KG, 49205 Hasbergen-Gaste (DE)
(72) Erfinder: DREYER, Heinz, 49205 Hasbergen (DE); LÜHRMANN, Johannes, 49134 Wallenhorst (DE)
(74) Vertreter: Grünecker, Kinkeldey, Stockmair & Schwanhäusser Anwaltssozietät
(86) Internationale Anmeldenummer: PCT/EP2002/003028
(87) Internationale Veröffentlichungsnummer: WO 2002/094004

(56) Entgegenhaltungen:
- EP-A- 0 292 650
- EP-A- 0 655 187
- EP-A- 0 910 939
- EP-A- 1 031 268

## Beschreibung

Die Erfindung betrifft einen Schleuderdüngerstreuer.

Ein derartiger Schleuderstreuer ist beispielsweise in der EP-06 55 187 A1 beschrieben. Die Wurfschaufeln bestehen aus zwei zueinander teileskopierbaren Teilen, die in unterschiedlichen Positionen einstellbar sind. Durch diese Einstellung kann der Schleuderdüngerstreuer auf verschiedene Arbeitsbreitenbereiche eingestellt werden.

Aus der EP 0392 650 ist ein Schleuderdüngerstreuer zum Verteilen von Düngemittel und dergl. bekannt. Hierbei weist die Schleuderscheibe kürzere und längere Wurfschaufeln auf, die zusätzlich einstellbar angeordnet sind, so dass verschiedene Streubreiten realisiert werden können. Aus der EP 1 031 268 ist ein weiterer Schleuderdüngerstreuer bekannt, der zwei rotierend angetriebene Schleuderscheiben aufweist, auf denen jeweils zwei rinnenförmig ausgebildete Wurfschaufeln unterschiedlicher Länge angeordnet sind, wobei diese eine aufrechte Rückwand aufweisen, in der schlitzförmige Durchtrittsöffnungen vorgesehen sind.

Der Erfindung liegt die Aufgabe zugrunde, einen Schleuderdüngerstreuer vorzuschlagen, der für verschiedene Arbeitsbreitenbereichen über einen gesamten Streuarbeitsbreitenbereich von insgesamt etwa 18 bis 48 m einstellbar ist und gleichzeitig eine verbesserte Streugleichmäßigkeit erzielt

Diese Aufgabe wird in erfindungsgemäßer Weise durch die kennzeichnenden Merkmale der Patentansprüche 1 und/oder 2 jeweils gelöst

In einer ersten Lösung gemäß des Patentanspruches 1 sind teleskopartig ausziehbare und einschiebbare Wurfschaufeln vorgesehen, die derart ausgebildet sind, dass für einen Streuarbeitsbreitenbereich von 18-28 m die Teile der Wurfschaufeln in jeweils eine Position zueinander einstellbar sind, in welcher die Umfangsgeschwindigkeit der Abstreukante der kürzeren Wurfschaufel 22,61 - 26,38 m/s, vorzugsweise etwa 24,12 m/sec und die Umlaufgeschwindigkeit der Abstreukante der längeren Wurfschaufel 32.03 - 35,80 m/s, vorzugsweise etwa 34,06 m/sec beträgt, dass für einen Streuarbeitsbreitenbereich von etwa 24-48 m, vorzugsweise bis 45 m die Teile der Wurfschaufeln in jeweils eine Position zueinander einstellbar sind, in welcher die Umfangsgeschwindigkeit der Abstreukante der kürzeren Wurfschaufel 24,87 - 28,64 m/sec, vorzugsweise etwa 26,75 m/sec und die Umlaufgeschwindigkeit der Abstreukante der längeren Wurfschaufel 39,56 - 43,33 m/sec, vorzugsweise etwa 41,60 m/sec beträgt Infolge dieser Maßnahmen lässt sich durch die jeweilige Einstellung der Wurfschaufeln der jeweilige Arbeitsbreitenbereich in einfacher Weise so einstellen, dass eine ausreichend gleichmäßige Verteilung des zu verteilenden Materiales erreicht wird.

Eine zweite Lösung wird gemäß des Kennzeichens des Patentanspruches 2 mit gegeneinander austauschbaren Wurfschaufelsätzen, die wahlweise zum Einsatz bringbar sind, und zwar in der Art, dass für einen Streuarbeitsbreitenbereich von 18-28 m ein Satz Schleuderscheiben mit Wurfschaufeln oder ein Satz Wurfschaufeln zum Einsatz kommt, in welcher die Umlaufgeschwindigkeit der Abstreukante der kürzeren Wurfschaufel 19,97 -24,12 m/sec, vorzugsweise etwa 22,08 m/sec und die Umfangsgeschwindigkeit der Abstreukante der längeren Wurfschaufel 32,03 - 35,80 m/sec, vorzugsweise etwa 34,06 m/sec beträgt, dass für einen Streuarbeitsbreitenbereich von etwa 24-48 m vorzugsweise bis 45 m eine Schleuderscheibe mit Wurfschaufeln oder ein Satz Wurfschaufeln zum Einsatz kommt, in welcher die Umfangsgeschwindigkeit der Abstreukante der kürzeren Wurfschaufel 24,87 - 28,64 m/sec, vorzugsweise etwa 26,75 m/sec und die Umfangsgeschwindigkeit der Abstreukante der längeren Wurfschaufel 39,56 - 43,33 m/sec, vorzugsweise etwa 41,60 m/sec beträgt. Infolge dieser Maßnahmen kann der Landwirt für den jeweiligen Verwendungszweck den optimal geeigneten Wurfschaufelsatz für den anstehenden Einsatzfall zum Einsatz bringen.

Insbesondere für den kleineren Arbeitsbreitenbereich hat sich gezeigt, dass es vorteilhaft ist, eine weitere Maßnahme zur Erreichung der Streugleichmäßigkeit vorzusehen, hierzu ist vorgesehen, dass die Durchtrittsöffnung für den größeren Streuarbeitsbreitenbereich derart angeordnet ist, dass der Beginn der Durchtrittsöffnung mit einer Umfangsgeschwindigkeit von 19,97 bis 22,98 m/sec, vorzugsweise 21,40 m/sec, und das Ende der Durchtrittsöffnung mit einer Umfangsgeschwindigkeit von 23,36 bis 26,38 m/sec, vorzugsweise 24,34 m/sec läuft.

In manchen Fällen kann es vorteilhaft sein, um eine Vergleichmäßigung der Streugutverteilung, vor allem bei großen Arbeitsbreitenbereichen, zu erreichen, dass in der Rückwand zumindest einer der Wurfschaufeln zumindest eine schlitzförmige Durchtrittsöffnung vorgesehen ist Bei Versuchen hat sich herausgestellt, dass es vorteilhaft ist, dass nur in der Rückwand der kürzeren Wurfschaufel die Durchtrittsöffnung vorgesehen ist.

Insbesondere konnte eine besonders gute Gleichmäßigkeit für verschiedene Düngersorten erreicht werden, wenn die Durchtrittsöffnung in der Rückwand des äußeren Teils des ausziehbaren Teils vorgesehen ist.

Eine besonders bevorzugte Anordnung der Durchtrittsöffnung lässt sich nach eingehenden Versuchen dadurch erreichen, dass der Beginn der Durchtrittsöffnung einen Umlaufkreis mit einem Durchmesser von 460 bis 520 mm, vorzugsweise 496 mm und das Ende der Durchtrittsöffnung einen Umlaufkreis von 540 bis 640 mm, vorzugsweise 594 mm beschreibt, dass die Durchtrittsöffnung für den größeren Streuarbeitsbreitenbereich derart angeordnet ist, dass der Beginn der Durchtrittsöffnung einen Umlaufkreis mit einem Durchmesser von 530 bis 610 mm, vorzugsweise 568 mm, und das Ende der Durchtrittsöffnung einem Umlaufkreis mit einem Durchmesser von 620 bis 700 mm, vorzugsweise 646 mm beschreibt.

Die Anordnung einer vorteilhaften Lage der Durchtnttsöffnung ist den Patentansprüchen 7 bis 9 zu entnehmen.

In besonders schwierigen Fällen, vor allem bei Düngern, der von Düngersorte zu Düngersorte und Düngerart von Düngerart sehr stark aufgrund der physikalischen Eigenschaften voneinander abweicht, hat sich als vorteilhaft herausgestellt, dass Mittel zur Verstellung der Aufgabefläche des Materials auf die Schleuderscheibe vorhanden sind. Somit lassen sich auch diese extrem schwierig zu streuenden Düngem sehr gleichmäßig ausbringen. Um in einfacher Weise den Düngerstreuer optimal auf diese Düngersorten zur Erreichung einer gleichmäßigen Streuerteilung in einfacher Weise einstellen zu können, ist vorgesehen, dass die Mittel mittels vorzugsweise rechnergesteuerter Einstellmittel ein- und/oder verstellbar sind.

Des weiteren können zur Vereinfachung der Einstellung der Maschine auf verschiedenen Ausbringarten und der Anpassung an die einzelnen Gegebenheiten auf dem Feld vorgesehen sein, dass für einen Streuarbeitsbreitenbereich von 18-28 m ein Satz Schleuderscheiben mit Wurfschaufeln zum Einsatz kommt, in welcher die Umlaufgeschwindigkeit der Abstreukante der kürzeren Wurfschaufel einen Umlaufkreis mit einem Durchmesser von 530-640 mm, vorzugsweise etwa 586 mm und die Abstreukante der längeren Wurfschaufel einen Umlaufkreis mit einem Durchmesser von 850-950 mm, vorzugsweise etwa 904 mm beschreibt, dass für einen Streuarbeitsbreitenbereich von etwa 24-48 m vorzugsweise bis 45 m eine Schleuderscheibe mit Wurfschaufeln zum Einsatz kommt, in welcher die Abstreukante der kürzeren Wurfschaufel einen Umlaufkreis mit einem Durchmesser von 660-760 mm, vorzugsweise etwa 710 mm und die Abstreukante der längeren Wurfschaufel einen Umlaufkreis mit einem Durchmesser von 1050-1150, vorzugsweise etwa 1104 mm beschreibt.

Um in automatischer Weise den Düngerstreuer an die jeweils herrschenden Ausbringbedingungen in einfacher Weise einstellbar zu machen, ist vorgesehen, dass ein Bordcomputer vorgesehen ist, in welchem die Ausbringmenge pro Flächeneinheit und Standort abgespeichert ist und anhand dieser abgespeicherten Mittel auch das Grenzstreuen einstellbar ist.

Eine besonders gute Gleichmäßigkeit der Düngerverteilung für verschiedene Düngersorten mit unterschiedlichen physikalischen Streueigenschaften kann dadurch erreicht werden, dass die kürzere Wurfschaufel der beiden Scheiben im wesentlichen nur den mittleren Bereich der Arbeitsbreite bestreut und die längere Wurfschaufel jeweils im wesentlichen den auf ihrer Seite an die mittlere Arbeitsbreite anschließenden Bereich mit einer kleineren Überlappungszone des Streufächers, die von der langen und von der kürzeren Schaufel erzeugt werden, bestreut.

Eine besonders gute Streustabilität des Streubildes für die Ausbringung verschiedenster Düngersorten mit unterschiedlichen physikalischen Streueigenschaften konnte in überraschender Weise dadurch erreicht werden, dass die kürzere Wurfschaufel in bezug auf die längere Wurfschaufel in bezogen auf die Drehrichtung der Schleuderscheiben gesehen derart angeordnet ist, dass die Befestigungsstellen der Wurfschaufeln einen Winkel von > 180°, vorzugsweise etwa von 210 ° miteinander einschließen, so dass die kürzere gegenüber der längeren Wurfschaufel entgegen der Drehrichtung um diesen Winkel zurückversetzt oder nacheilend angeordnet ist.

Weitere Einzelheiten der Erfindung sind der Beispielsbeschreibung und den Zeichnungen zu entnehmen. Hierbei zeigen
- Fig. 1: einen Schleuderdüngerstreuer in der Ansicht von hinten und in Prinzipdarstellung,
- Fig. 2: die in Fahrtrichtung gesehen linke Schleuderscheibe mit teleskopartigen Wurfschaufeln in der Draufsicht, wobei die Wurfschaufeln eingeschoben und für eine Arbeitsbreite von 18 bis 28 m eingestellt sind,
- Fig. 3: die gleiche Wurfschaufel gemäß Fig. 2, jedoch mit ausgezogenen Wurfschaufeln, wobei die Wurfschaufeln für eine Arbeitsbreite von 18 bis 48 m eingestellt sind,
- Fig. 4: eine weitere Schleuderscheibe mit Wurfschaufeln in der Draufsicht, wobei die Wurfschaufeln einstückig ausgebildet und eine derartige Länge aufweisen, dass sie für eine Arbeitsbreite von 18 bis 28 m vorgesehen sind.
- Fig. 5: eine weitere Schleuderscheibe, wobei die Wurfschaufeln eine Länge aufweisen, um damit einen Arbeitsbreitenbereich von 18 bis 48 m abdecken zu können.

Der Schleuderdüngerstreuer ist mit dem Rahmen 1 ausgestattet, an dem der Vorratsbehälter 2 und ein Winkeltrieb mit den Winkelgetrieben 3 und dem Mittelgetriebe 4 angebracht sind. Hierbei ist der untere Bereich des Vorratsbehälters 2 durch ein dachförmiges Mittelteil 5 in zwei Auslauftrichter 6 unterteilt, in deren Bodenplatten 7 sich nicht näher dargestellte Auslauföffnungen befinden. Diese Auslauföffnungen sind mit Hilfe von schieberförmigen Dosierelementen verschließbar und in unterschiedlichen Öffnungsweiten mittels Einstellmittel einstellbar.

Unterhalb der Auslauföffnungen sind quer zur Fahrtrichtung auf den Ausgangswellen 8 der Winkelgetriebe 3 die beiden Schleuderscheiben 9 nebeneinander beabstandet zueinander angeordnet. Auf diesen Schleuderscheiben 9 sind jeweils die kürzere Wurfschaufel 10 und die längere Wurfschaufel 11 befestigt. Die Befestigung der Schleuderscheiben 9 auf den Ausgangswellen 8 des Winkelgetriebes 3 ist derart ausgebildet, dass sich die Schleuderscheiben 9 vorzugsweise werkzeuglos auf diesen Ausgangswellen 8 montieren lassen bzw. von den Ausgangswellen 8 demontieren lassen. Den einzelnen Schleuderscheiben 9 wird das sich im Vorratsbehälter 2 des Schleuderdüngerstreuers befindliche Düngemittel in genau einstellbaren Mengen zugeführt. Die rotierenden Schleuderscheiben 9 verteilen mit den Wurfschaufeln 10 und 11 den auf die jeweilige Schleuderscheibe 9 auftreffenden Düngemittelstrom gleichmäßig über die einstellbare Arbeitsbreite des Düngerstreuers. Die Schleuderscheiben 9 rotieren entgegengesetzt zueinander.

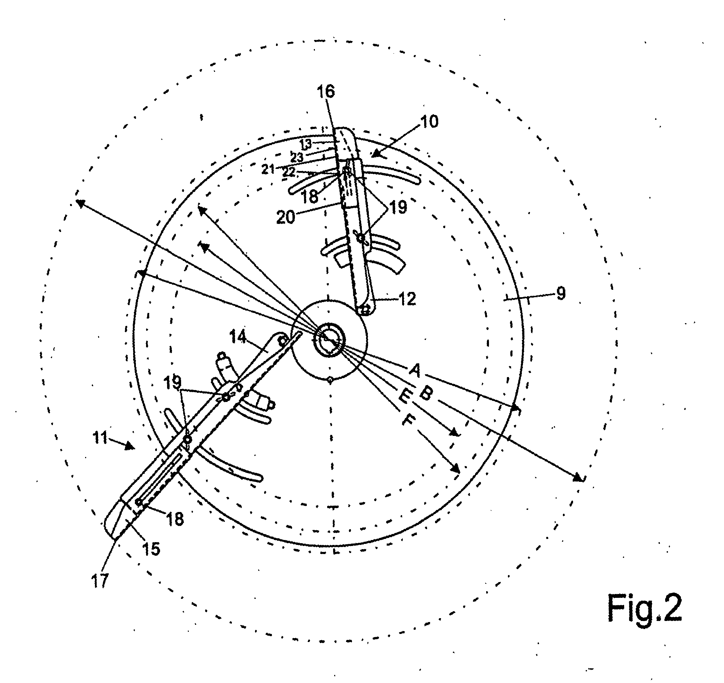

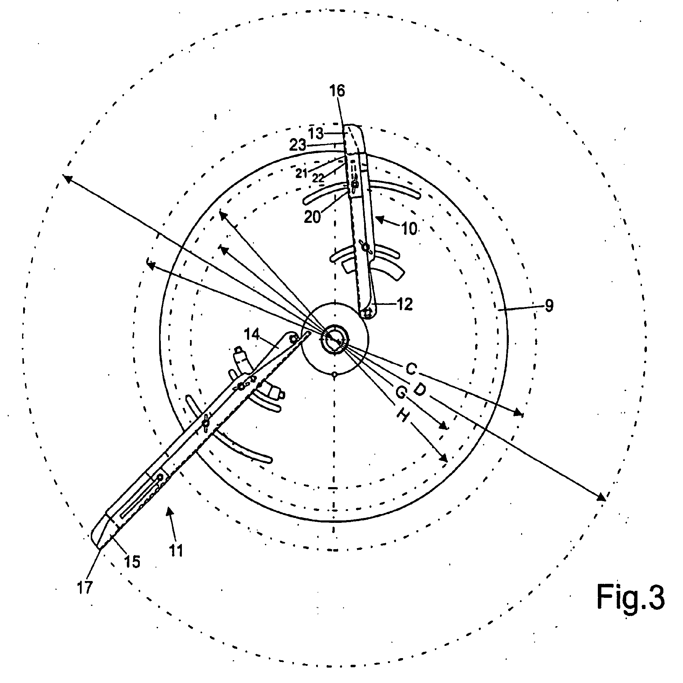

Die Wurfschaufel 10 gemäß den Fig. 2 und 3 besteht aus dem inneren Teil 12 und dem äußeren Teil 13, während die Wurfschaufel 11 gemäß den Fig. 2 und 3 aus dem inneren Teil 14 und dem äußeren Teil 15 besteht. Die inneren und äußeren Teile der Wurfschaufeln 10 und 11 können in unterschiedlichen Längen zueinander eingestellt werden, um so den Schleuderdüngerstreuer auf verschiedene Arbeitsbreiten einstellen zu können, welches anhand der Fig. 2 und 3 näher erläutert wird.

In der Fig. 2 ist die linke Schleuderscheibe 9 dargestellt. Die nicht dargestellte rechte Schleuderscheibe ist spiegelbildlich zu der dargestellten linken Schleuderscheibe 9 ausgebildet. Die kürzere teleskopartige Wurfschaufel 10, bestehend aus dem inneren 12 und äußeren Teil 13, sowie die längere teleskopartige Wurfschaufel 11, bestehend aus dem inneren 14 und äußeren Teil 15, sind für eine Arbeitsbreite von 18 - 28 m in der Länge eingestellt, d.h. die inneren Teile 12 und 14 sind eingeschoben.

Die Abstreukante 16 der kürzeren Wurfschaufel 10 beschreibt hierbei einen Umlaufkreis mit einem Durchmesser A von 600 - 700 mm, vorzugsweise etwa 640 mm und die Schleuderscheibe 9 wird mit einer Drehzahl von 650 - 800 U/min, vorzugsweise 720 U/min angetrieben. Hierbei beschreibt die Abstreukante. 16 der kürzeren Wurfschaufel 10 eine Umfangsgeschwindigkeit von 22,61 - 26,38 m/sec, vorzugsweise etwa 24,12 m/sec.

Der innere 14 und äußere Teil 15 der längeren Wurfschaufel 11 sind für den Streuarbeitsbreitenbereich von 18 - 28 m bei einer Drehzahl von 650 - 800 U/min, vorzugsweise etwa 720 U/min so eingestellt, dass die Abstreukante 17 der längeren Wurfschaufel 11 einen Umlaufkreis B mit einem Durchmesser von 850 - 950 mm, vorzugsweise etwa 904 mm beschreibt. Hierbei läuft dann die Abstreukante 17 der längeren.Wurfschaufel 11 mit einer Umfangsgeschwindigkeit von 39,56 - 43,33 m/sec, vorzugsweise etwa 41,60 m/sec um. Die Wurfschaufeln 10 und 11 sind mittels der als Schrauben 18 ausgebildeten Festsetzmittel in der entsprechenden Länge zueinander zu arretieren und winkelverschwenkbar in verschiedenen Winkellagen auf den Schleuderscheiben 9 mittels der als Schrauben 19 ausgebildeten Festsetzmittel festsetzbar angeordnet, so dass eine Anpassung innerhalb des Arbeitsbreitenbereiches auf die jeweiligen Streu- und Wurfeigenschaften der abgeschleuderten Düngerpartikel möglich ist.

In der Rückwand 20 des äußeren Teils 12 der kürzeren Wurfschaufel 10 ist die Durchtrittsöffnung 21 angeordnet. Diese Durchtrittsöffnung 21 ist für den. Streuarbeitsbreitenbereich von 18 - 28 m derart angeordnet, dass der Beginn 22 der Durchtrittsöffnung 21 mit einer Umfangsgeschwindigkeit von 17,33 - 19,59 m/sec, vorzugsweise 18,96 m/sec und das Ende 23 der Durchtrittsöffnung 21 mit einer Umfangsgeschwindigkeit von 20,36 - 24,12 m/sec, vorzugsweise 22,38 m/sec umläuft.

In der Fig.3 ist die linke Schleuderscheibe 9 mit den ausgezogenen Wurfschaufeln 10 und 11 dargestellt. Die nicht dargestellte rechte Schleuderscheibe ist spiegelbildlich zu der dargestellten linken Schleuderscheibe 9 ausgebildet. Die kürzere Wurfschaufel 10, bestehend aus dem inneren 12 und äußeren Teil 13, sowie die längere Wurfschaufel 11, bestehend aus dem inneren 14 und äußeren Teil 15, ist für eine Arbeitsbreite von etwa 18 - 48 m, vorzugsweise bis 45 m in der Länge eingestellt. Die Abstreukante 16 der kürzeren Wurfschaufel 10 beschreibt hierbei einen Umlaufkreis mit einem Durchmesser C von 660 - 760 mm, vorzugsweise etwa 710 mm und die Schleuderscheibe 9 wird mit einer Drehzahl von 650 - 800 U/min, vorzugsweise 720 U/min angetrieben. Hierbei beschreibt die Abstreukante 16 der kürzeren Wurfschaufel 10 eine Umfangsgeschwindigkeit von 24,87 - 28,64 m/sec, vorzugsweise etwa 26,75 m/sec.

Der innere Teil 14 und äußere Teil 15 der längeren Wurfschaufel 11 sind für den Streuarbeitsbreitenbereich von etwa 18 - 48 m, vorzugsweise bis 45 m bei einer Drehzahl von 660 - 760 U/min, vorzugsweise etwa 720 U/min so eingestellt, dass die Abstreukante 17 der längeren Wurfschaufel 11 einen Umlaufkreis D mit einem Durchmesser von 1050 - 1150 mm, vorzugsweise etwa 1104 mm beschreibt. Hierbei läuft dann die Abstreukante 17 der längeren Wurfschaufel 11 mit einer Umfangsgeschwindigkeit von 39,56 - 43,33 m/sec, vorzugsweise etwa 41,60 m/sec um. Die Wurfschaufeln 10 und 11 sind mittels der als Schrauben 18 ausgebildeten Festsetzmittel in der entsprechenden Länge zueinander zu arretieren und winkelverschwenkbar in verschiedenen Winkellagen auf den Schleuderscheiben 9 mittels der als Schrauben 19 ausgebildeten Festsetzmittel festsetzbar angeordnet, so dass eine Anpassung innerhalb des Arbeitsbreitenbereiches auf die jeweiligen Streu- und Wurfeigenschaften der abgeschleuderten Düngerpartikel möglich ist.

In der Rückwand 20 des äußeren Teils 12 der kürzeren Wurfschaufel 10 ist die Durchtrittsöffnung 21 angeordnet. Diese Durchtrittsöffnung 21 ist für den größeren Arbeitsbreitenbereich von 18 - 48 m in der ausgezogenen Position derart angeordnet, dass der Beginn 22 der Durchtrittsöffnung 21 mit einer Umfangsgeschwindigkeit von 19,97 - 22,98 m/sec, vorzugsweise 21,40 m/sec und das Ende 23 der Durchtrittsöffnung 21 mit einer Umfangsgeschwindigkeit von 23,36 - 26,38 m/sec, vorzugsweise 24,34 m/sec umläuft.

Die schlitzförmige Durchtrittsöffnung 21 ist also nur in der Rückwand 20 der kürzeren Wurfschaufel 10 angeordnet, und zwar in der Rückwand 20 des äußeren ausziehbaren Teiles 15 der ausziehbaren Teile.

Hierbei ist die Durchtrittsöffnung 21 bei einer Drehzahl von 650 - 800 U/min, vorzugsweise 720 U/min so angeordnet, dass die Durchtrittsöffnung 21 für den kleineren Streuarbeitsbreitenbereich derart angeordnet ist, dass der Beginn 22 der Durchtrittsöffnung 21 einen Umlaufkreis mit einem Durchmesser E von 460 bis 520 mm, vorzugsweise 496 mm und das Ende 23 der Durchtrittsöffnung einen Umlaufkreis mit einem Durchmesser F von 540 bis 640 mm, vorzugsweise 594 mm beschreibt, dass die Durchtrittsöffnung 21 für den größeren Streuarbeitsbreitenbereich derart angeordnet ist, dass der Beginn 22 der Durchtrittsöffnung einen Umlaufkreis mit einem Durchmesser G von 530 bis 610 mm, vorzugsweise 568 mm, und das Ende 23 der Durchtrittsöffnung einem Umlaufkreis mit einem Durchmesser H von 620 bis 700 mm, vorzugsweise 646 mm beschreibt.

In manchen Fällen kann es sinnvoll sein, die Aufgabefläche des Materiales auf die Schleuderscheiben 9 einstellen zu können. Hierzu sind die Schleuderscheiben 9 mit ihren Winkelgetrieben derart am Rahmen angeordnet, dass sie mittels einer nicht dargestellten Verstellvorrichtung in oder entgegen der Fahrtrichtung feststellbar sind. Des weiteren können zwischen dem Rahmen 1 und den die Schleuderscheiben 9 tragenden Winkelgetrieben 3 Mittel, beispielsweise Einstellmotoren, vorgesehen sein, mittels welcher die Schleuderscheiben 9 gegenüber der Dosieröffnung und dem Rahmen verstellbar sind. Diese Einstellmotoren können mittels rechnergesteuerter Einstellmittel angesteuert und verstellbar sein, so dass sie von einem Bordcomputer, in welchem die Ausbringmenge pro Flächeneinheit an einem Standort abgespeichert ist, und anhand dieser abgespeicherten Mittel auch auf das Grenzstreuen eingestellt werden. Auch kann über die Verstellung der Schleuderscheiben 9 gegenüber dem Rahmen 1 und den Dosierorganen der Streuer von Normal- auf Grenzstreuen umgestellt werden. Hierbei können der Bordcomputer, die Dosierorgane und die Mittel, welche die Schleuderscheiben 9 gegenüber dem Rahmen und den Dosierorganen verstellen, zum Grenzstreuen und für eine Arbeitsbreitenreduzierung eingestellt werden.

Des weiteren sei darauf hingewiesen, dass die kürzeren Wurfschaufeln 10 der beiden Scheiben 9 im wesentlichen nur den mittleren Bereich der Arbeitsbreite bestreuen und die längeren Wurfschaufeln 11 die jeweils im wesentlichen den auf ihrer Seite an die mittlere Arbeitsbreite anschließenden Bereich mit einer kleinen Überlappungszone des Streufächers, die von der langen und von der kürzeren Schaufel 10 und 11 erzeugt werden, bestreut.

Die kürzere Wurfschaufel 10 ist im Bezug auf die längere Wurfschaufel 11 bezogen auf die Drehrichtung 24 der Schleuderscheiben 9 gesehen, derart angeordnet, dass die Befestigungsstellen 25 und 26 der Wurfschaufeln 10 und 11 einen Winkel α von größer 180°, vorzugsweise von etwa 210° miteinander einschließen, so dass die kürzere Wurfschaufel 10 gegenüber der längeren Wurfschaufel 11 entgegen der Drehrichtung 24 um diesen Winkel α zurückversetzt oder nacheilend angeordnet ist.

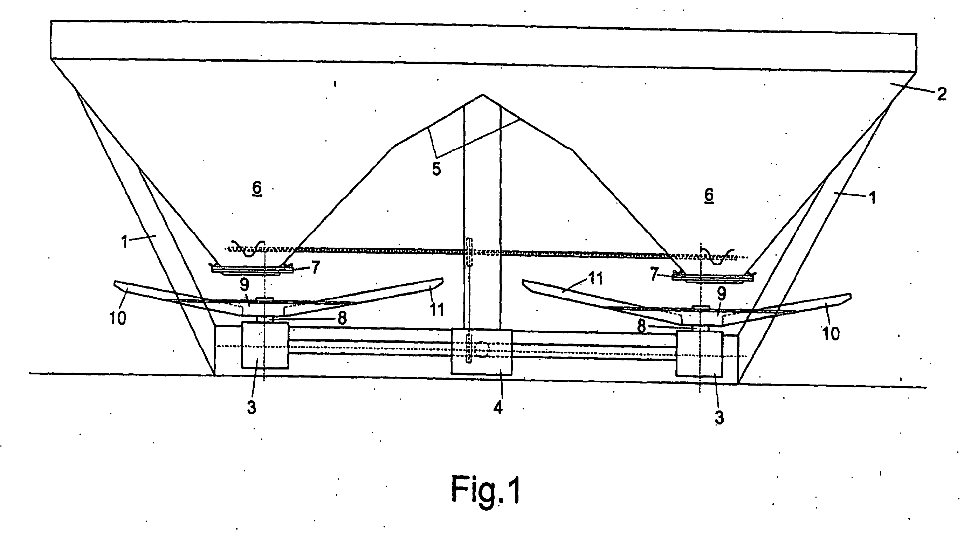

Wie vorstehend geschildert, ist der Schleuderdüngerstreuer, wenn die Schleuderscheiben9 gemäß den Fig. 2 und 3 zum Einsatz kommen, der jeweilige Streuarbeitsbreitenbereich dadurch einstellbar, dass die teleskopartigen Wurfschaufeln 10 und 11 entweder in der eingeschobenen (Fig. 1) oder ausgezogenen Position (Fig. 3) eingestellt werden.

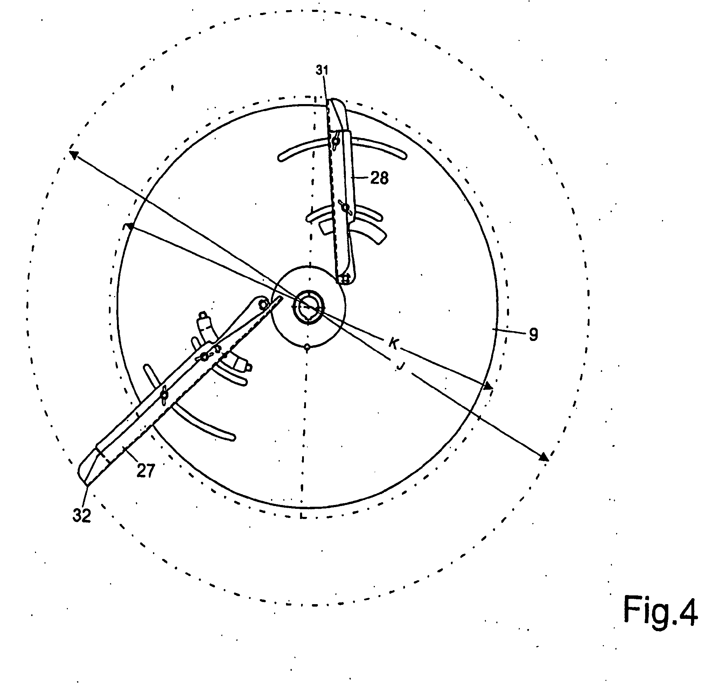

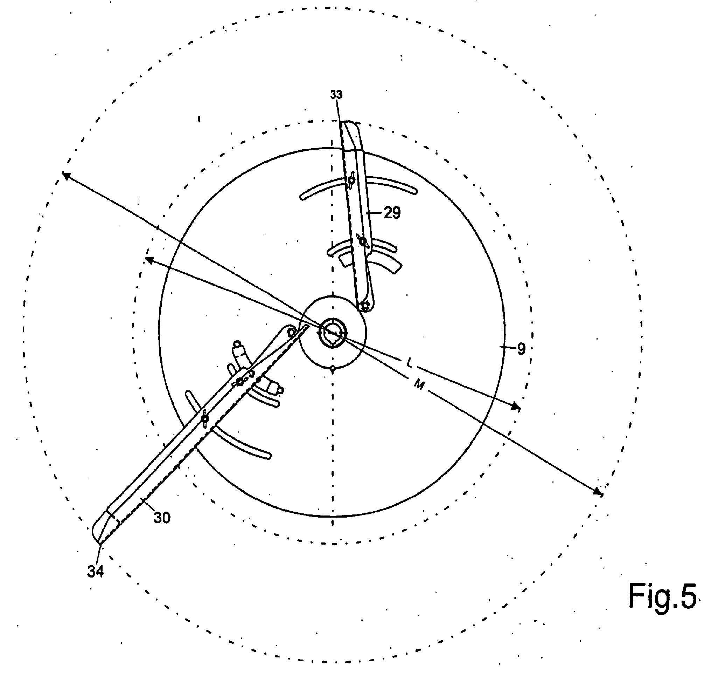

Um bei dem Ausführungsbeispiel wie nach den Fig.4 und 5 den Schleuderdüngerstreuer auch mit Wurfschaufeln einsetzen zu können, deren Länge nicht einstellbar sind, sind Schleuderscheibensätze mit kürzeren oder längeren Wurfschaufeln 27,28,29,30 oder verschiedene Wurfschaufelsätze (kürzere Wurfschaufeln und längere Wurfschaufeln für den jeweiligen Arbeitsbreitenbereich) gegeneinander austauschbar. Hierbei werden dann die entsprechenden Schleuderscheiben 9 mit den darauf angeordneten Wurfschaufeln 27,28,29,30 oder die Wurfschaufeln 27,28,29,30 auf den Schleuderscheiben 9 ausgetauscht.

Nach dem Ausführungsbeispiel gemäß Fig.4 ist eine Schleuderscheibe 9 für den Streuarbeitsbreitenbereich von 18 - 28 m vorgesehen. Auf den Schleuderscheiben 9 sind die längere Wurfschaufel 27 und die kürzere Wurfschaufel 28 angeordnet. Für diesen Streuarbeitsbreitenbereich von 18 - 48 m kommt ein Satz Schleuderscheiben mit Wurfschaufeln 27,28 bzw. ein Satz Wurfschaufeln 27,28 zum Einsatz, in welcher die Umlaufgeschwindigkeit der Abstreukante 31 der kürzeren Wurfschaufel 28 19,97 - 24,12 m/sec, vorzugsweise etwa 22,08 m/sec beträgt. Dieses lässt sich beispielsweise mit einer Wurfschaufel 28 erreichen, die bei einer Drehzahl D von 650 - 800. U/min, vorzugsweise 720. U/min angetrieben wird, wobei dann die Abstreukante 31 der kürzeren Wurfschaufel 28 derart angeordnet ist, dass die Abstreukante 31 einen Umlaufkreis mit einem Durchmesser von 530 - 640 mm, vorzugsweise etwa 586 mm beschreibt. Die Abstreukante 32 der längeren Wurfschaufel 27 läuft bei diesem Streuarbeitsbreitenbereich mit einer Umfangsgeschwindigkeit um die 32,03 - 35,80 m/sec, vorzugsweise etwa 34,06 m/sec beträgt. Diese Umlaufgeschwindigkeit lässt sich beispielsweise dadurch erreichen, dass die Schleuderscheibe 9 mit einer Drehzahl von 650 - 800 U/min, vorzugsweise 720 U/min antreibbar ist und dann die Abstreukante 32 der längeren Wurfschaufel 27 einen Umlaufkreise mit einem Durchmesser K von 850 - 950 mm, vorzugsweise etwa 904 mm beschreibt.

Um den Schleuderdüngerstreuer für eine Arbeitsbreite von 24 - 48 m einsetzen zu können, werden die Wurfschaufeln 29,30 bzw. die Schleuderscheiben mit Wurfschaufeln 29,30 gemäß Fig.4 gegen Wurfschaufeln bzw. Schleuderscheiben mit Wurfschaufeln 29,30 gemäß Fig.5 ausgetauscht.

Hierbei weisen die kürzeren Wurfschaufeln 29 für den Streuarbeitsbreiten-Bereich von 24 - 48 m, vorzugsweise 45 m eine Länge auf, dass die Umfangsgeschwindigkeit der Abstreukante 33 der kürzeren Wurfschaufeln 29 24,87 - 28,64 m/sec, vorzugsweise etwa 26,75 m/sec und die Umfangsgeschwindigkeit der Abstreukante 34 der längeren Wurfschaufel 31 39,56 - 43, 33- m/sec, vorzugsweise etwa 41, 60 m/sec beträgt. Diese Umfangsgeschwindigkeiten lassen sich mit Schleuderscheiben 9 bzw. Wurfschäufeln 29,30 erreichen, die mit einer Drehzahl von 650 - 800 -U/min, vorzugsweise 720 U/min antreibbar sind, wobei die Abstreukante 33 der kürzeren Wurfschaufel 29 einen Umlaufkreis mit einem Durchmesser L von 660 - 760 mm, vorzugsweise etwa 710 mm und die Abstreukante 34 der längeren Wurfschaufel 30 einen Umlaufkreis mit einem Durchmesser M von 1050 - 1150 mm, vorzugsweise etwa 1104 mm beschreibt.

## Patentansprüche

1. Verfahren zum Einsatz eines Schleuderstreuers zum Verteilen von Düngemitteln und dergleichen auf landwirtschaftlichen Flächen mit einem Vorratsbehälter und zumindest zwei unterhalb des Vorratsbehälters angeordneten, rotierend angetriebenen Schleuderscheiben, auf denen zumindest zwei aus zwei Teilen bestehende, unterschiedlich lange Wurfschaufeln angeordnet sind, wobei jeweils zumindest das äußere Teil der Wurfschaufeln in unterschiedlichen Stellungen zur Erreichung unterschiedlicher Längen der Wurfschaufeln versetzbar und gegenüber dem inneren Teil der jeweiligen Wurfschaufel längenverstellbar und in unterschiedlichen Positionen zur Einstellung mehrerer Streuarbeitsbreitenbereiche arretierbar ist und wobei die jeweilige aus einem inneren und einem äußeren Teil bestehende Wurfschaufel als teleskopartig ausziehbare und einschiebbare Wurfschaufel ausgebildet ist, wobei
- für einen Streuarbeitsbreitenbereich von 18-28 m die Teile (12,13,14,15) der Wurfschaufeln (10, 11) in jeweils eine Position zueinander einstellbar sind, in welcher die Umfangsgeschwindigkeit der Abstreukante (16) der kürzeren Wurfschaufel (10) 22,61 - 26,38 m/s, vorzugsweise etwa 24,12 m/s, und die Umlaufgeschwindigkeit der Abstreukante (17) der längeren Wurfschaufel (11) 32,03 - 35,80 m/s, vorzugsweise etwa 34,06 m/s, beträgt,
- für einen Streuarbeitsbreitenbereich von etwa 18-48 m, vorzugsweise bis 45 m die Teile (12,13,14,15) der Wurfschaufeln (10, 11) in jeweils eine Position zueinander einstellbar sind, in welcher die Umfangsgeschwindigkeit der Abstreukante (16) der kürzeren Wurfschaufel (10) 24,87 - 28,64 m/s, vorzugsweise etwa 26,75 m/s, und die Umlaufgeschwindigkeit der Abstreukante (17) der längeren Wurfschaufel (11) 39,56 - 43,33 m/s, vorzugsweise etwa 41,60 m/s, beträgt und
- in der Rückwand zumindest einer der Wurfschaufeln (10,11,27,28,29,30) zumindest eine schlitzförmige Durchtrittsöffnung (21) vorgesehen ist, wobei die Durchtrittsöffnung (21) für den größeren Streuarbeitsbreitenbereich derart angeordnet ist, dass der Beginn (22) der Durchtrittsöffnung (21) mit einer Umfangsgeschwindigkeit von 19,97 bis 22,98 m/s, vorzugsweise 21,40 m/s, und das Ende (23) der Durchtrittsöffnung (21) mit einer Umfangsgeschwindigkeit von 23,36 bis 26,38 m/s, vorzugsweise 24,34 m/s umläuft.

2. Verfahren zum Einsatz eines Schleuderstreuers zum Verteilen von Düngemitteln und dergleichen auf landwirtschaftlichen Flächen mit einem Vorratsbehälter und zumindest zwei unterhalb des Vorratsbehälters angeordneten, rotierend angetriebenen Schleuderscheiben, auf denen zumindest zwei unterschiedlich lange Wurfschaufeln angeordnet sind, wobei zur Erreichung verschiedener Streuarbeitsbereiche verschiedene und gegeneinander austauschbare Schleuderscheibensätze mit Wurfschaufeln unterschiedlicher Länge und/oder verschiedene und gegeneinander austauschbare Wurfschaufelsätze mit Wurfschaufeln unterschiedlicher Länge zum Einsatz bringbar sind bzw. gebracht werden, wobei
- für einen Streuarbeitsbreitenbereich von 18-28 m, ein Satz Schleuderscheiben mit Wurfschaufeln (10, 11) zum Einsatz kommt, in welcher die Umlaufgeschwindigkeit der Abstreukante (16) der kürzeren Wurfschaufel (10) 19,97 - 24,12 m/s, vorzugsweise etwa 22,08 m/s und die Umfangsgeschwindigkeit der Abstreukante (17) der längeren Wurfschaufel (11) 32,03 - 35,80 m/s, vorzugsweise etwa 34,06 m/s beträgt,
- für einen Streuarbeitsbreitenbereich von etwa 24-48 m, vorzugsweise bis 45 m eine Schleuderscheibe mit Wurfschaufeln zum Einsatz kommt, in welcher die Umfangsgeschwindigkeit der Abstreukante (16) der kürzeren Wurfschaufel (10) 24,87 - 28,64 m/s, vorzugsweise etwa 26,75 m/s, und die Umfangsgeschwindigkeit der Abstreukante (17) der längeren Wurfschaufel (11) 39,56 -43,33 m/s, vorzugsweise etwa 41,60 m/s, beträgt und
- in der Rückwand zumindest einer der Wurfschaufeln (10,11,27,28,29,30) zumindest eine schlitzförmige Durchtrittsöffnung (21) vorgesehen ist, wobei die Durchtrittsöffnung (21) für den größeren Streuarbeitsbreitenbereich derart angeordnet ist, dass der Beginn (22) der Durchtrittsöffnung (21) mit einer Umfangsgeschwindigkeit von 19,97 bis 22,98 m/s, vorzugsweise 21,40 m/s, und das Ende (23) der Durchtrittsöffnung (21) mit einer Umfangsgeschwindigkeit von 23,36 bis 26,38 m/s, vorzugsweise 24,34 m/s, umläuft.

3. Verfahren nach Anspruch 1 oder 2, **dadurch gekennzeichnet, dass** die Durchtrittsöffnung (21) für den kleineren Streuarbeitsbreitenbereich derart angeordnet ist, dass der Beginn (22) der Durchtrittsöffnung (21) mit einer Umfangsgeschwindigkeit von 17,33 bis 19,59 m/sec, vorzugsweise 18,69 m/sec und das Ende (23) der Durchtrittsöffnung (21) mit einer Umfangsgeschwindigkeit von 20,35 bis 24,12 m/sec, vorzugsweise 22,38 m/sec umläuft.

4. Verfahren nach einem der Ansprüche 1 bis 3, **dadurch gekennzeichnet, dass** nur in der Rückwand (20) der kürzeren Wurfschaufel (10) eine Durchtrittsöffnung (21) vorgesehen ist.

5. Verfahren nach einem oder mehreren der vorstehenden Ansprüche, **dadurch gekennzeichnet, dass** die Durchtrittsöffnung (21) in der Rückwand (20) des äußeren Teiles der ausziehbaren Teile vorgesehen ist.

6. Verfahren nach einem oder mehreren der vorstehenden Ansprüche, **dadurch gekennzeichnet, dass** die Durchtrittsöffnung für den kleineren Streuarbeitsbreitenbereich derart angeordnet ist, dass der Beginn (22) der Durchtrittsöffnung (21) einen Umlaufkreis mit einem Durchmesser (E) von 460 bis 520 mm, vorzugsweise 496 mm und das Ende (23) der Durchtrittsöffnung (21) einen Umlaufkreis mit einem Durchmesser (F) von 540 bis 640 mm, vorzugsweise 594 mm beschreibt, dass die Durchtrittsöffnung für den größeren Streuarbeitsbreitenbereich derart angeordnet ist, dass der Beginn (22) der Durchtrittsöffnung (21) einen Umlaufkreis mit einem Durchmesser (G) von 530 bis 610 mm, vorzugsweise 568 mm, und das Ende (23) der Durchtrittsöffnung (21) einem Umlaufkreis mit einem Durchmesser (H) von 620 bis 700 mm, vorzugsweise 646 mm beschreibt.

7. Verfahren nach einem oder mehreren der vorstehenden Ansprüche, **dadurch gekennzeichnet, dass** nur in der kürzeren Wurfschaufel (10) für den größeren Streuarbeitsbreitenbereich eine Durchtrittsöffnung (21) angeordnet ist.

8. Verfahren nach Anspruch 7, **dadurch gekennzeichnet, dass** die Durchtrittsöffnung für den kleineren Streuarbeitsbreitenbereich derart angeordnet ist, dass der Beginn (22) der Durchtrittsöffnung (21) einen Umlaufkreis mit einem Durchmesser von 530 - 610 mm, vorzugsweise 568 mm und das Ende der Durchtrittsöffnung einen Umlauf kreis von 620 - 700 mm vorzugsweise 646 mm beschreibt.

9. Verfahren nach Anspruch 7, **dadurch gekennzeichnet, dass** die Durchtrittsöffnung (21) für den kleineren Streuarbeitsbreitenbereich derart angeordnet ist, dass der Beginn der Durchtrittsöffnung mit einer Umfangsgeschwindigkeit von 27,74 - 31,92 m/Sec, vorzugsweise 29,73 m/sec und das Ende der Durchtrittsöffnung einer Umfangsgeschwindigkeit von 32,45 - 36,63 m/sec mm vorzugsweise 33,81 m/sec umläuft.

10. Verfahren nach einem oder mehreren der vorstehenden Ansprüche, **dadurch gekennzeichnet, dass** Mittel zur Verstellung der Aufgabefläche des Materials auf die Schleuderscheiben (9) vorhanden sind.

11. Verfahren nach einem oder mehreren der vorstehenden Ansprüche, **dadurch gekennzeichnet, dass** die Mittel mittels vorzugsweise rechnergesteuerter Einstellmittel ein- und/oder verstellbar sind.

12. Verfahren nach einem oder mehreren der vorstehenden Ansprüche, **dadurch gekennzeichnet, dass** mittels der Mittel das Ausbringen (Menge, Streurichtung, Wurfweite und Richtung) des Materials für das Grenzstreuen, für eine Arbeitsbreitenreduzierung etc. einstellbar ist.

13. Verfahren nach einem oder mehreren der vorstehenden Ansprüche, **dadurch gekennzeichnet, dass** ein Bordcomputer vorgesehen ist, in welchem die Ausbringmenge pro Flächeneinheit und Standort abgespeichert ist und anhand dieser abgespeicherten Mittel auch das Grenzstreuen einstellbar ist.

14. Verfahren nach einem oder mehreren der vorstehenden Ansprüche, **dadurch gekennzeichnet, dass** die kürzere Wurfschaufel (10,27,29) der beiden Scheiben (9) im wesentlichen nur den mittleren Bereich der Arbeitsbreite bestreut und die längere Wurfschaufel (11,28,30) jeweils im wesentlichen den auf ihrer Seite an die mittlere Arbeitsbreite anschließenden Bereich mit einer kleineren Überlappungszone des Streufächers, die von der langen und von der kürzeren Schaufel erzeugt werden, bestreut.

15. Verfahren nach einem oder mehreren der vorstehenden Ansprüche, **dadurch gekennzeichnet, dass** die kürzere Wurfschaufel (10,27,29) in bezug auf die längere Wurfschaufel (11,28,30) in bezogen auf die Drehrichtung der Schleuderscheiben (9) gesehen derart angeordnet ist, dass die Befestigungsstellen (25,26) der Wurfschaufeln (10,11) einen Winkel α von > 180°, vorzugsweise etwa von 210 ° miteinander einschließen, so dass die kürzere (10) gegenüber der längeren Wurfschaufel (11) entgegen der Drehrichtung (24) um diesen Winkel α zurückversetzt oder nacheilend angeordnet ist.

## Claims

1. Method for the use of a centrifugal broadcaster for the distribution of fertilisers and the like on agricultural areas, the said centrifugal broadcaster having a hopper and at least two centrifugal discs that are disposed underneath the hopper and are driven in a rotating manner, on which centrifugal discs are disposed at least two throwing vanes, which comprise two parts and are of different lengths, wherein in each case at least the outer part of the throwing vane is displaceable in various positions to achieve different lengths and is longitudinally adjustable relative to the inner part of the respective throwing vane and is lockable in various positions to set several scattering width ranges and wherein the respective throwing vane, comprising an inner part and an outer part, is in the form of a throwing vane that can be extended and retracted in a telescopic manner, wherein
- for a scattering width range of 18 - 28 m, the parts (12, 13, 14, 15) of the throwing vanes (10, 11) are adjustable one relative to another respectively into a position, in which the circumferential speed of the spreading edge (16) of the shorter throwing vane (10) is 22.61 - 26.38 m/s, preferably approximately 24.12 m/s, and the circumferential speed of the spreading edge (17) of the longer throwing vane (11) is 32.03 - 35.80 m/s, preferably approximately 34.06 m/s,
- for a scattering width range of approximately 18 - 48 m, preferably up to 45 m, the parts (12, 13, 14, 15) of the throwing vanes (10, 11) are adjustable one relative to another respectively into a position, in which the circumferential speed of the spreading edge (16) of the shorter throwing vane (10) is 24.87 - 28.64 m/s, preferably approximately 26.75 m/s, and the circumferential speed of the spreading edge (17) of the longer throwing vane (11) is 39.56 - 43.33 m/s, preferably approximately 41.60 m/s and
- in the rear wall of at least one of the throwing vanes (10, 11, 27, 28, 29, 30) there is provided at least one slot-shaped opening (21), wherein the opening (21) is disposed for the larger scattering width range in such a manner that the start (22) of the opening (21) rotates at a circumferential speed of 19.97 to 22.98 m/s, preferably 21.40 m/s, and the end (23) of the opening (21) rotates at a circumferential speed of 23.36 to 26.38 m/s, preferably 24.34 m/s.

2. Method for using a centrifugal broadcaster for distributing fertilisers and the like on agricultural areas, the said centrifugal broadcaster having a hopper and at least two centrifugal discs, which are disposed underneath the hopper and are driven in a rotating manner, on which centrifugal discs are disposed at least two throwing vanes of different lengths, wherein to achieve different scattering width ranges, different sets of centrifugal discs that can be exchanged one for another and have throwing vanes of different lengths and/or different sets of throwing vanes that can be exchanged for one another and have throwing vanes of different lengths can be used or respectively are used, wherein
- for a scatter width range of 18 - 28 m, a set of centrifugal discs is used with throwing vanes (10, 11), where the circumferential speed of the spreading edge (16) of the shorter throwing vane (10) is 19.97 - 24.12 m/s, preferably approximately 22.08 m/s, and the circumferential speed of the spreading edge (17) of the longer throwing vane (11) is 32.03 - 35.80 m/s, preferably approximately 34.06 m/s,
- for a scatter width range of 24 - 48 m, preferably up to 45 m, a centrifugal disc is used with throwing vanes, where the circumferential speed of the spreading edge (16) of the shorter throwing vane (10) is 24.87 - 28. 64m/s, preferably approximately 26.75 m/s, and the circumferential speed of the spreading edge (17) of the longer throwing vane (11) is 39.56 - 43.33 m/s, preferably approximately 41.60 m/s and
- in the rear wall of at least one of the throwing vanes (10, 11, 27, 28, 29, 30) there is provided at least one slot-shaped opening (21), wherein the opening (21) is disposed for the larger scattering width range in such a manner that the start (22) of the opening (21) rotates at a circumferential speed of 19.97 to 22.98 m/s, preferably 21.40 m/s, and the end (23) of the opening (21) rotates at a circumferential speed of 23.36 to 26.38 m/s, preferably 24.34 m/s.

3. Method according to claim 1 or 2, **characterised in that** the opening (21) for the smaller scattering width range is disposed in such a manner that the start (22) of the opening (21) rotates at a circumferential speed of 17.33 to 19.59 m/sec, preferably 18.69 m/sec, and the end (23) of the opening (21) rotates at a circumferential speed of 20.35 to 24. 12 m/sec, preferably 22.38 m/sec.

4. Method according to one of claims 1 to 3, **characterised in that** an opening (21) is provided only in the rear wall (20) of the shorter throwing vane (10).

5. Method according to one or more of the preceding claims, **characterised in that** the opening (21) is provided in the rear wall (20) of the outer part of the extendable parts.

6. Method according to one or more of the preceding claims, **characterised in that** the opening for the smaller scattering width range is disposed in such a manner that the start (22) of the opening (21) describes a circuit with a diameter (E) of 460 to 520 mm, preferably 496 mm, and the end (23) of the opening (21) describes a circuit with a diameter (F) of 540 to 640 mm, preferably 594 mm, **in that** the opening for the larger scattering width range is disposed in such a manner that the start (22) of the opening (21) describes a circuit with a diameter (G) of 530 to 610 mm, preferably 568 mm, and the end (23) of the opening (21) describes a circuit with a diameter (H) of 620 to 700 mm, preferably 646 mm.

7. Method according to one or more of the preceding claims, **characterised in that** an opening (21) is disposed only in the shorter throwing vane (10) for the larger scattering width range.

8. Method according to claim 7, **characterised in that** the opening for the smaller scattering width range is disposed in such a manner that the start (22) of the opening (21) describes a circuit with a diameter of 530 - 610 mm, preferably 568 mm, and the end of the opening describes a circuit of 620 - 700 mm, preferably 646 mm.

9. Method according to claim 7, **characterised in that** the opening (21) for the smaller scattering width range is disposed in such a manner that the start of the opening rotates at a circumferential speed of 27.74 - 31.92 m/sec, preferably 29.73 m/sec, and the end of the opening rotates at a circumferential speed of 32.45 - 36.63 m/sec, preferably 33.81 m/sec.

10. Method according to one or more of the preceding claims, **characterised in that** there are means for adjusting the delivery area of the material onto the centrifugal discs (9).

11. Method according to one or more of the preceding claims, **characterised in that** the means are adjustable and/or displaceable through the intermediary of preferably computer-controlled adjusting means.

12. Method according to one or more of the preceding claims, **characterised in that** through the intermediary of the means the delivery (quantity, scatter direction, throwing width and direction) of the material is adjustable for a limited broadcasting operation, for a reduction of the working width, etc.

13. Method according to one or more of the preceding claims, **characterised in that** there is provided an on-board computer, in which the delivery amount per unit area and location is stored and the limited broadcasting operation is also adjustable by way of this stored means.

14. Method according to one or more of the preceding claims, **characterised in that** the shorter throwing vane (10, 27, 29) of the two discs (9) substantially spreads only over the central region of the working width and the longer throwing vane (11, 28, 30) spreads respectively substantially over the region on its side abutting against the central working width with a smaller overlap area of the broadcasting compartment, which overlap area is created by the long vane and by the shorter vane.

15. Method according to one or more of the preceding claims, **characterised in that** the shorter throwing vane (10, 27, 29) is disposed with reference to the longer throwing vane (11, 28, 30), when viewed with reference to the direction of rotation of the centrifugal discs (9), in such a manner that there is an angle α of > 180°, preferably approximately 210°, between the securing points (25, 26) of the throwing vanes (10, 11), such that the shorter throwing vane (10) is disposed set back or trailing by this angle α relative to the longer throwing vane (11) in opposition to the direction of rotation (24).

## Revendications

1. Procédé de mise en oeuvre d'un épandeur centrifuge pour distribuer des engrais ou produits analogues sur des surfaces agricoles, comprenant un réservoir d'alimentation et au moins deux disques d'épandage entraînés en rotation sous le réservoir d'alimentation et muni d'au moins deux palettes d'éjection de longueurs différentes, en deux parties, dont chaque fois au moins la partie extérieure des palettes d'éjection peut être mise dans des positions différentes, et bloquée et être réglables en longueur par rapport à la partie intérieure de chaque palette d'éjection pour obtenir des longueurs différentes des palettes d'éjection et régler plusieurs plages de largeur de travail d'épandage,
les palettes d'éjection respectives formées d'une partie intérieure et d'une partie extérieure étant réalisées sous la forme de palettes déjection télescopiques, extensibles ou rétractables ; et selon lequel
- pour une plage de largeur de travail d'épandage comprise entre 18 - 28 m, on règle les parties (12, 13, 14, 15) des palettes d'éjection (10, 11) l'une par rapport à l'autre dans une position dans laquelle la vitesse périphérique de l'arête d'éjection (16) des palettes d'éjection courtes (10) est comprise dans une plage de 22,61 - 26,38 m/s de préférence d'environ 24,12 m/s, et la vitesse périphérique de l'arête d'éjection (17) des palettes d'éjection longues (11) est dans une plage comprise entre 32,03 - 35,80 m/s et de préférence d'environ 34,06 m/s,
- pour une plage de largeur de travail d'épandage comprise entre environ 18 - 48 m de préférence égale à 45 m, on règle les parties (12, 13, 14, 15) des palettes d'éjection (10, 11) l'une par rapport à l'autre dans une position telle que la vitesse périphérique de l'arête d'éjection (16) de la palette d'éjection courte (10) soit située dans une plage comprise entre 24,87 - 28,64 m/s de préférence de l'ordre de 26,75 m/s et que la vitesse périphérique de l'arête d'éjection (17) de la palette d'éjection longue (11) soit située dans une plage comprise entre 39,56 et 43,33 m/s et de préférence de l'ordre de 41,60 m/s,
- la paroi arrière d'au moins l'une des palettes d'éjection (10, 11, 27, 28, 29, 30) comporte au moins un orifice de passage en forme de fente et cet orifice de passage (21) est installé pour la plus grande plage de largeur d'épandage de façon que le début (22) de l'orifice de passage (21) tourne à une vitesse périphérique comprise entre 19,97 et 22,98 m/s et de préférence égale à 21,40 m/s et que l'extrémité (23) de l'orifice de passage (21) tourne à une vitesse périphérique comprise entre 23,36 et 26,38 m/s et de préférence de 24,34 m/s.

2. Procédé de mise en oeuvre d'un disque d'épandage pour distribuer des engrais ou produits analogues sur des surfaces agricoles, comportant un réservoir d'alimentation et au moins deux disques d'épandage entraînés en rotation, installés sous le réservoir d'alimentation, ces disques étant équipés d'au moins deux palettes d'éjection de longueurs différentes,
et pour réaliser des plages de travail d'épandage différentes, on utilise des jeux de disques d'épandage différents et interchangeables comportant des palettes d'éjection de longueurs différentes et/ou des jeux de palettes d'éjection différents et interchangeables avec des palettes d'éjection de longueurs différentes, selon lequel
- pour une plage de largeur de travail d'épandage comprise entre 18 et 28 m, on utilise un jeu de disques d'épandage avec des palettes d'épandage (10, 11) dont la vitesse périphérique de l'arête d'éjection (16) des palettes d'éjection courtes (10) est comprise entre 19,97 et 24,12 m/s et de préférence d'environ 22,08 m/s et la vitesse périphérique de l'arête d'éjection (17) de la palette d'éjection longue (11) est comprise dans une plage entre 32,03 et 35,80 m/s et de préférence d'environ 34,06 m/s,
- pour une plage de largeur de travail d'épandage de l'ordre de 24 - 48 m et de préférence jusqu'à 45 m, on utilise un disque d'épandage équipé de palettes d'éjection dont la vitesse périphérique de l'arête d'éjection (16) de la palette d'éjection courte (10) est dans une plage de 24,87 - 28,64 m/s et de préférence de l'ordre de 26,75 m/ s et la vitesse périphérique de l'arête d'éjection (17) des palettes d'éjection longues (11) est dans une plage comprise entre 39,56 - 43,33 m/s et de préférence de l'ordre de 41,60 m/s ; et
- la paroi arrière d'au moins l'une des palettes d'éjection (10, 11, 27, 28, 29, 30) comporte au moins un orifice de passage (21) en forme de fente, et
- cet orifice de passage (21) est installé pour la plage des grandes largeurs de travail d'épandage de façon que le début (22) de l'orifice de passage (21) tourne à une vitesse périphérique comprise entre 19,97 et 22,98 m/s et de préférence égale à 21,40 m/s et l'extrémité (23) de l'orifice de passage (21) tourne à une vitesse périphérique comprise entre 23,36 et 26,38 m/ s et de préférence égale à 24,34 m/ s.

3. Procédé selon la revendication 1 ou 2,
**caractérisé en ce que**
l'orifice de passage (21) est installé pour la petite plage de largeur de travail d'épandage de façon que le début (22) de l'orifice de passage (21) tourne à une vitesse périphérique comprise entre 17,33 et 19,59 m/s de préférence égale à 18,69 m/s et l'extrémité (23) de l'orifice de passage (21) tourne à une vitesse périphérique comprise entre 20,35 et 24,12 m/ s et de préférence égale à 22,38 m/ s.

4. Procédé selon l'une des revendications 1 à 3,
**caractérisé en ce que**
seulement la paroi arrière (20) de la palette éjection courte (10) comporte un orifice de passage (21).

5. Procédé selon l'une ou plusieurs des revendications précédentes,
**caractérisé en ce que**
l'orifice de passage (21) est prévu dans la paroi arrière (20) de la partie extérieure de la partie extensible.

6. Procédé selon l'une ou plusieurs des revendications précédentes,
**caractérisé en ce que**
l'orifice de passage pour la plage des petites largeurs de travail d'épandage est installée de façon que le début (22) de cet orifice de passage (21) se trouve sur un cercle périphérique d'un diamètre (E) de 460 à 520 mm et de préférence égal à 496 mm et que l'extrémité (23) de l'orifice de passage (21) décrive un cercle d'un diamètre (F) compris entre 540 et 640 mm de préférence égal à 594 mm et que l'orifice de passage soit installé pour la plage des grandes largeurs de travail d'épandage de façon que le début (22) de l'orifice de passage (21) se situe sur un cercle d'un diamètre (G) de 530 - 610 mm et de préférence égal à 568 mm et que l'extrémité (23) de l'orifice de passage (21) décrive un cercle d'un diamètre (H) compris entre 620 et 700 mm et de préférence égal à 646 mm.

7. Procédé selon l'une ou plusieurs des revendications précédentes,
**caractérisé en ce qu'**
un orifice de passage (21) n'est prévu que dans la palette éjection courte (10) pour la plage des grandes largeur de travail d'épandage.

8. Procédé selon la revendication 7,
**caractérisé en ce que**
pour la plage des petites largeurs de travail d'épandage, l'orifice de passage est installé de façon que son début (22) décrive un cercle d'un diamètre compris entre 530 et 610 mm et de préférence égal à 568 mm et que l'extrémité de l'orifice de passage décrive un cercle de 620 - 700 mm et de préférence égal à 646 mm.

9. Procédé selon la revendication 7,
**caractérisé en ce que**
l'orifice de passage (21) de la plage des petites largeurs de travail d'épandage est installé pour que son début tourne à une vitesse périphérique de l'ordre de 27,74 - 31,92 m/s et de préférence égale à 29,73 m/s et que l'extrémité de l'orifice de passage tourne à une vitesse périphérique comprise entre 32,45 et 36,63 m/s et de préférence de 33,81 m/s.

10. Procédé selon l'une ou plusieurs des revendications précédentes,
**caractérisé par**
des moyens pour régler la surface d'arrivée de la matière sur les disques d'épandage (9).

11. Procédé selon l'une quelconques des revendications précédents,
**caractérisé en ce qu'**
on règle les moyens par des commandes par calculateur.

12. Procédé selon l'une ou plusieurs des revendications précédentes,
**caractérisé en ce que**
les moyens permettent de régler la distribution (quantité, direction d'épandage, portée d'éjection et direction) des produits pour l'épandage en limite de parcelle, pour réduire la largeur de travail, etc...

13. Procédé selon l'une ou plusieurs des revendications précédentes,
**caractérisé en ce qu'**
un ordinateur embarqué contient en mémoire la quantité à distribuer par unité de surface et en fonction de l'emplacement et à l'aide de ces moyens mis en mémoire, il permet également de régler l'épandage en limite de parcelle.

14. Procédé selon l'une ou plusieurs des revendications précédentes,
**caractérisé en ce que**
la palette d'éjection courte (10, 27, 29) des deux disques (9) assure l'épandage principalement seulement dans la zone médiane de la largeur de travail et la palette d'éjection longue (11, 28, 30) assure l'épandage principalement seulement dans une plage adjacente à la largeur de travail médiane, avec une zone de chevauchement réduite des éventails d'épandage générés par des palettes d'éjection longue et courte.

15. Procédé selon l'une ou plusieurs des revendications précédentes,
**caractérisé en ce que**
la palette d'éjection courte (10, 27, 29) est installée dans le sens de rotation du disque d'épandage (9) par rapport à la palette d'éjection longue (11, 28, 30) pour que les points de fixation (25, 26) des palettes d'éjection (10, 11) fassent un angle α > 180° et de préférence de l'ordre de 210° pour que la palette d'éjection courte soit en retrait ou en aval de la palette d'éjection longue (11) de cet angle α dans le sens contraire de rotation (24).
